# FASCICULE DE BREVET EUROPEEN

(11) **EP 2 920 032 B1**
(45) Date de publication et mention de la délivrance du brevet: **04.04.2018**
(21) Numéro de dépôt: 13789323.6
(22) Date de dépôt: 12.11.2013
(51) Int. Cl.: B60R 21/205, B62D 25/14

(54) **TRAVERSE DE PLANCHE DE BORD A COUSSIN GONFLABLE DE SECURITE INTEGRE ET VEHICULE CORRESPONDANT**
ARMATURENBRETT-QUERELEMENT MIT EINGEBAUTEM AIRBAG UND ENTSPRECHENDES FAHRZEUG
DASHBOARD CROSSMEMBER WITH AN INTEGRATED AIRBAG AND CORRESPONDING VEHICLE

(30) Priorité: 16.11.2012 FR 1260903
(43) Date de publication de la demande: 23.09.2015
(73) Titulaire: Renault S.A.S., 92100 Boulogne-Billancourt (FR)
(72) Inventeur: NICOD, Pascal, F-78330 Fontenay-le-Fleury (FR); LARVOR, Philippe, F-78960 Voisins-le-Bretonneux (FR); PERVEYRIE, Sylvie, F-78280 Guyancourt (FR)
(86) Numéro de dépôt international: PCT/EP2013/073579
(87) Numéro de publication internationale: WO 2014/076060

(56) Documents cités:
- EP-A1- 0 796 769
- DE-A1- 19 537 233
- FR-A1- 2 704 510
- GB-A- 2 403 192

## Description

L'invention concerne le poste de conduite d'un véhicule et plus particulièrement une traverse de planche de bord à coussin gonflable de sécurité intégré.

En général, le coussin gonflable de sécurité (ou airbag de sécurité) passager à l'avant du véhicule est intégré dans un boîtier lui-même fixé rigidement à la traverse de planche de bord du poste de conduite du véhicule, cette traverse s'étendant suivant une direction transversale au véhicule. Ce boîtier contient le générateur de gaz permettant le déploiement du sac du coussin gonflable et présente une ouverture tournée vers le dessus pour le déploiement du coussin gonflable en dehors du boîtier en direction du passager assis en regard.

Un tel agencement présente l'inconvénient d'être encombrant verticalement et suivant la direction longitudinale du véhicule. Il n'est ainsi pas possible d'abaisser la hauteur de la planche de bord venant au dessus de la traverse ou de la reculer longitudinalement vers l'avant du véhicule.

Afin de gagner de l'espace suivant ces directions, certains dispositifs prévoient d'intégrer le générateur de gaz à la traverse tel que décrit dans le document GB2403192. Le boîtier fixé sur la traverse contient alors uniquement le sac du coussin gonflable. Cet agencement reste toutefois encombrant verticalement et suivant la direction longitudinale du véhicule.

De plus, ces agencements nécessitent le montage d'un boîtier sur la traverse de planche de bord, ce qui est coûteux en matériau, en temps de montage et représente un poids non négligeable.

On connait également via les documents DE 195 37 233 A1, qui correspond au préambule de la revendication 1, et EP 0796 769 A1 des traverses de planches de bord intégrant des coussins gonflables et des inserts de renfort. L'invention vise à pallier ces inconvénients et à proposer des alternatives de conception en proposant une traverse de planche de bord à coussin gonflable de sécurité intégré présentant un encombrement réduit verticalement et suivant la direction longitudinale du véhicule. L'intégration du coussin gonflable à la traverse de planche de bord permet en outre de rendre la traverse de planche de bord apparente au moins du côté passager et d'envisager la réalisation d'une traverse esthétique pour le passager. L'utilisation d'un boîtier n'étant plus nécessaire, l'ensemble traverse/coussin gonflable est ainsi plus léger, moins coûteux, plus simple et plus rapide à monter.

A cet effet, l'objet de l'invention concerne une traverse de planche de bord de véhicule automobile selon la revendication 1. Un tel agencement permet de réduire l'encombrement de l'ensemble traverse/coussin gonflable suivant les directions verticale et longitudinale du véhicule. Il est ainsi possible de réaliser une planche de bord très basse verticalement et dégagée suivant la direction longitudinale, procurant une sensation d'espace au passager.

A l'intérieur de la traverse, le coussin gonflable est dans un état dans lequel il est replié sur lui-même de manière à pouvoir se déployer en dehors de la traverse via l'ouverture. Le mode de pliage utilisé pour le coussin gonflable est donc similaire au mode de pliage utilisé habituellement, par exemple lorsque le coussin gonflable est placé à l'intérieur d'un boîtier fixé à la traverse.

Du fait de l'intégration à la traverse du coussin gonflable, la traverse selon l'invention présente une section transversale agrandie par rapport aux traverses existantes. La traverse est ainsi conformée de manière à pouvoir loger à l'intérieur de sa cavité interne le coussin gonflable, notamment dans un état replié sur lui-même, prêt à être déployé. Les dimensions de la traverse pourront donc varier en fonction des dimensions du coussin gonflable à y intégrer.

Cette augmentation de la section transversale est toutefois compensée par la suppression du boîtier logeant le coussin gonflable. Ainsi, un gain d'espace suivant la direction verticale d'au moins 60 mm peut être obtenu.

La forme de l'ouverture peut être rectangulaire ou de toute autre forme adaptée pour permettre le déploiement du coussin gonflable. Les dimensions de l'ouverture pourront ainsi varier en fonction du volume du coussin gonflable. A titre d'exemple, une ouverture rectangulaire peut être de 210mm sur 100mm.

La traverse peut être réalisée en acier, aluminium ou magnésium, son épaisseur sera déterminée en fonction de la résistance désirée. Cette épaisseur est par exemple de l'ordre de 2 à 5mm.

Lorsque le coussin gonflable se déploie suite à un choc vers le buste du passager assis en regard, un effort opposé est exercé sur la traverse de planche de bord. Cet effort s'exerce suivant un plan longitudinal vertical du véhicule et présente une composante verticale plus importante que la composante longitudinale. La traverse peut ainsi avoir à résister à des efforts de poussée de 750 kg à 2500kg.

Il peut ainsi être avantageux de renforcer la traverse afin de lui permettre de supporter ces efforts, ce qui peut être requis par les législations.

A cet effet, l'invention prévoit de disposer un ou plusieurs inserts de renfort à l'intérieur de la cavité du profilé de chaque côté de l'ouverture suivant la direction longitudinale de la traverse et/ou au niveau de l'ouverture suivant la direction longitudinale de la traverse. De tels renforts sont le plus souvent fixés au profilé de la traverse. Ils peuvent être réalisés en acier ou tout autre matériau apportant une résistance suffisante.

Ces inserts de renfort peuvent présenter une section transversale en forme de I, H, ou en forme de polygone à au moins quatre côtés. De tels inserts comprennent ainsi des parois d'appui qui sont appliquées contre les faces internes du profilé et reliées par des parois de liaison s'étendant au travers de la cavité. De telles parois d'appui sont conformées pour épouser la face interne des parois du profilé. La présence de parois de liaison s'étendant au travers de la cavité ne permet pas toujours de loger un coussin gonflable entre les parois d'appui et des parois d'appui peuvent obturer l'ouverture du profilé. Dans ces cas, les inserts sont positionnés de part et d'autre de l'ouverture suivant la direction longitudinale de la traverse. Les inserts de renfort sont conformés de manière à présenter une forme identique à la forme de la traverse et à épouser au moins en partie la face interne des parois du profilé. Une ouverture peut alors être prévue pour correspondre à l'ouverture de sortie du coussin gonflable, ce qui peut permettre de disposer l'insert au niveau de cette ouverture suivant la direction longitudinale de la traverse.

En alternative ou en combinaison aux renforts internes, on peut également prévoir de fixer un ou plusieurs renforts externes au moins en partie sur la face externe des parois du profilé, de chaque côté de l'ouverture suivant la direction longitudinale de la traverse et/ou au niveau de l'ouverture suivant la direction longitudinale de la traverse.

De préférence, de tels renforts externes seront disposés sur une face externe du profilé opposée à l'ouverture de manière à ne pas être vus par le passager si la traverse est visible.

Le profilé formant la traverse peut présenter toute forme adaptée pour recevoir un coussin gonflable. En particulier, la section transversale du profilé peut ne pas être constante sur toute la longueur du profilé.

Le générateur de gaz permettant le déploiement du coussin gonflable peut être distant de la traverse.

Toutefois, il sera de préférence situé à proximité du coussin gonflable, et plus particulièrement solidaire de la traverse.

Avantageusement et de manière non limitative, la traverse peut ainsi comprendre un générateur de gaz pour le gonflage du coussin gonflable logé à l'intérieur de la cavité, ce générateur de gaz étant fixé sur une face interne du profilé située en regard de l'ouverture. Un tel agencement favorise le déploiement du coussin gonflable en direction de l'ouverture. Le générateur de gaz est en effet disposé entre le coussin gonflable et le profilé, contre la face interne d'une paroi du profilé située en regard de l'ouverture. Dans ce mode de réalisation, le générateur de gaz est alors mis en place par l'ouverture du profilé avant l'installation du coussin gonflable.

Dans un autre mode de réalisation, la traverse peut comprendre un générateur de gaz pour le gonflage du coussin gonflable situé à l'extérieur du profilé, le générateur étant fixé sur une face externe du profilé du côté opposé à l'ouverture, le profilé présentant un orifice permettant de relier le générateur de gaz au coussin gonflable. La section transversale du profilé formant la traverse peut alors être réduite par rapport au mode de réalisation dans lequel le générateur de gaz est disposé à l'intérieur de la traverse.

Le générateur de gaz choisi sera dimensionné en fonction du volume du coussin gonflable intégré à la traverse.

Avantageusement et de manière non limitative, un élément de protection peut recouvrir les bords de l'ouverture, ceci peut permettre d'éviter que le coussin gonflable ne se déchire lors de son déploiement. Un tel élément de protection peut se présenter sous la forme d'un joint ou insert en matériau polymère recouvrant les bords de l'ouverture, éventuellement suffisamment rigide pour supporter le panneau de fermeture. Avantageusement, ce panneau de fermeture peut être réalisé d'une pièce avec l'élément de protection.

Le panneau de fermeture peut être fixé rigidement au profilé sur tout le pourtour de l'ouverture. Il peut alors également assurer une fonction de protection des bords de l'ouverture. Le panneau de fermeture comprend alors des amorces de rupture permettant la sortie du coussin gonflable.

Ces amorces de ruptures sont par exemple des lignes d'épaisseur plus faible ou bien des lignes de prédécoupe formée de découpes en pointillés. Elles peuvent être en forme de H ou en forme de U, longeant les bords de l'ouverture.

En variante, le panneau de fermeture peut être fixé rigidement au profilé sur une partie seulement du pourtour de l'ouverture, des amorces de rupture réparties sur le reste du pourtour de l'ouverture permettant le détachement du panneau de fermeture lors du déploiement du coussin gonflable.

Ces deux variantes peuvent également être combinées.

Ce panneau de fermeture peut être en matériau polymère ou en cuir, généralement de faible épaisseur, par exemple de 1 à 3 mm d'épaisseur, de préférence de 1 à 2 mm d'épaisseur.

L'invention concerne également un véhicule automobile comprenant une traverse de planche de bord selon l'invention, la traverse étant orientée de sorte que le panneau de fermeture soit situé en regard du buste d'un passager assis, notamment assis sur un siège du véhicule situé en regard de la traverse de planche de bord.

Ce véhicule peut éventuellement être agencé de sorte que le panneau de fermeture par lequel sort le coussin gonflable de sécurité soit visible, autrement dit la planche de bord ne recouvrant pas la traverse à hauteur du panneau de fermeture.

En particulier, la traverse de planche de bord peut être fixée à un élément de la caisse du véhicule suivant la direction longitudinale du véhicule afin de maintenir la traverse lors du déploiement du coussin gonflable. Cet élément de la caisse est par exemple la traverse inférieure de baie.

L'invention est maintenant décrite en référence aux dessins annexés, non limitatifs, dans lesquels :
- la figure 1 est une représentation schématique vue de dessus d'une planche de bord de véhicule automobile supportée par une traverse selon l'invention ;
- la figure 2 est une représentation partielle en perspective de la traverse représentée figure 1
- la figure 3 une représentation partielle en perspective de la traverse représentée figure 2, en coupe au niveau de l'ouverture, le panneau de fermeture étant ôté ;
- les figures 4 à 7 sont des représentations schématiques d'une traverse selon l'invention, en coupe suivant un plan XZ et montrant différents types d'inserts de renfort utilisables.

Dans la présente description, les termes avant, arrière, supérieur, inférieur, font référence aux directions avant et arrière du véhicule, lorsque la traverse est montée sur le véhicule. Les axes X, Y, Z, correspondent respectivement à l'axe longitudinal (d'avant en arrière), transversal et vertical du véhicule. La direction longitudinale de la traverse correspond ainsi à la direction transversale du véhicule.

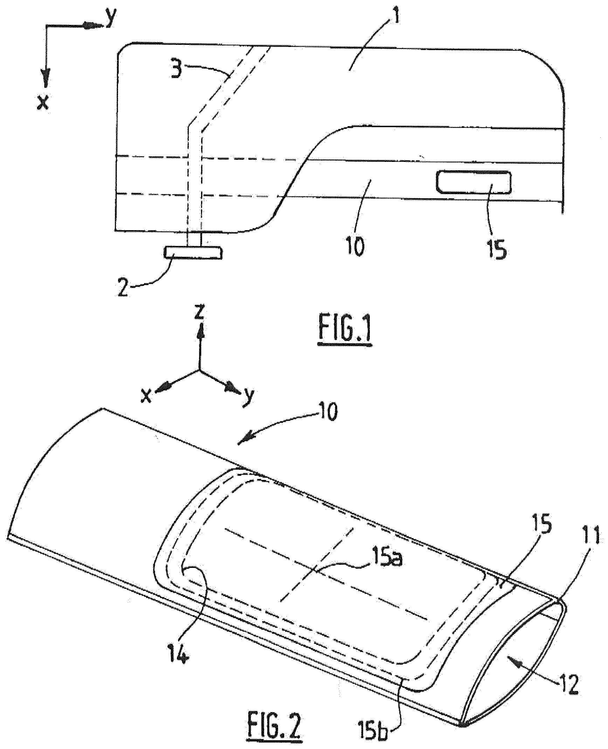

La figure 1 représente schématiquement en vue de dessus une planche de bord 1 d'un véhicule, un volant 2 étant disposé en regard de la partie gauche de la planche de bord 1, la colonne de direction 3 étant représentée symboliquement. La planche de bord 1 est supportée en partie par une traverse de planche de bord 10. Cette traverse 10 est fixée à ses extrémités à des éléments de structure du véhicule, de chaque côté du véhicule, typiquement aux pieds avant ou à des éléments de structure adjacents (non représentés).

La traverse de planche de bord 10 est formée d'un profilé 11 à profil fermé, les parois du profilé 11 définissant une cavité interne 12 (figures 2-3). Les termes « interne » et « externe » respectivement font ainsi référence aux éléments situés à l'intérieur de la cavité 12, respectivement à l'extérieur de la cavité 12.

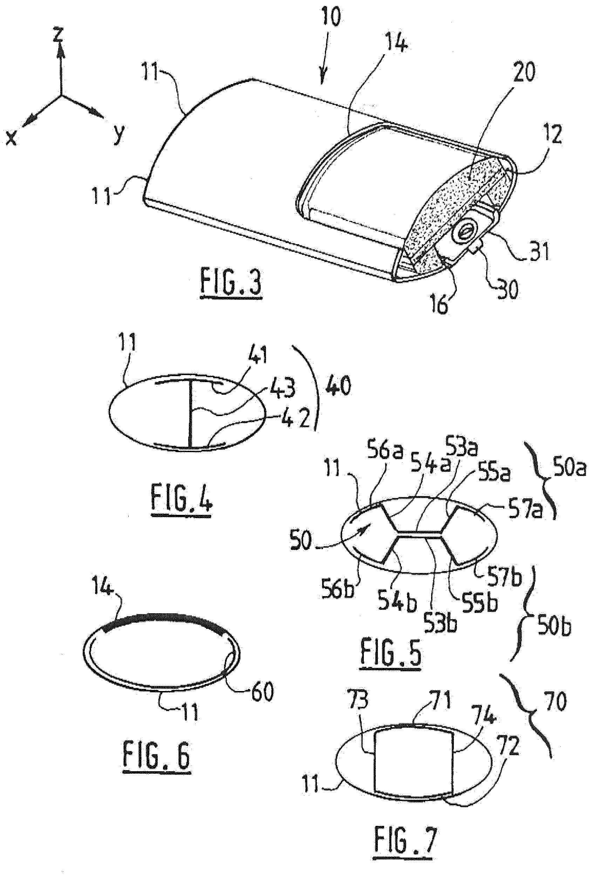

Selon l'invention, un coussin gonflable de sécurité 20 est disposé à l'intérieur de la cavité 12 en regard d'une ouverture 14 aménagée sur une paroi du profilé 11 (figure 3), cette paroi étant une paroi visible depuis l'habitacle du véhicule dans l'exemple représenté.

Un panneau de fermeture 15 obture totalement l'ouverture 14 (figures 1-2), ce panneau de fermeture 15 étant conformé pour permettre le déploiement du coussin gonflable 20 en dehors du profilé 11. Le panneau de fermeture 15 est en matériau polymère, éventuellement en cuir.

Dans l'exemple représenté, le panneau de fermeture 15 est fixé rigidement au profilé 11 sur tout le pourtour de l'ouverture 14. Le panneau de fermeture 15 comprend des amorces de rupture telles que des lignes de prédécoupe 15a, 15b formée de découpes en pointillés.

Ces lignes de prédécoupe sont conformées pour permettre la sortie du coussin gonflable 20 et sont par exemple des lignes de prédécoupe 15a situées à distance des bords de l'ouverture, par exemple en forme de croix tel que représenté sur la figure 2, ou encore en forme de I ou de H, ou de toute autre forme adaptée, et/ou des lignes de prédécoupe 15b en forme de U situées sur une partie au moins du pourtour de l'ouverture 14 (figure 2).

Les bords de l'ouverture 14 seront réalisés de manière à éviter le déchirement du coussin gonflable 20 lors de son déploiement. Cette protection peut être obtenue par un usinage particulier des bords, afin d'éviter tout bord vif, ou par la mise en place d'un élément de protection sur ces bords, de type joint ou autre.

Dans un exemple non représenté, le panneau de fermeture 15 peut également être fixé directement sur les bords de l'ouverture 14 ce qui peut permettre de protéger le coussin gonflable lors de son déploiement.

Le profilé 11 représenté sur les figures 2 et 3 présente une section transversale de forme elliptique et l'ouverture 14 présente une forme rectangulaire dont les coins sont arrondis.

Dans l'exemple représenté, un générateur de gaz 30 pour le gonflage du coussin gonflable 20 est situé à l'extérieur du profilé 11. Ce générateur de gaz 30 est fixé sur une face externe du profilé 11 du côté opposé à l'ouverture 14. Il est représenté partiellement sur la figure 3.

Le profilé 11 présente un orifice 16 permettant de relier le générateur de gaz 30 au coussin gonflable 20. Dans l'exemple, le générateur de gaz 30 comprend un support 31 inséré dans cet orifice 16 et fixé au profilé 11, par exemple au moyen de vis.

Le coussin gonflable 20 et son générateur de gaz 30 peuvent être solidarisés l'un à l'autre et former un module qui est ensuite installé à l'intérieur de la traverse 10, le générateur de gaz 30 pouvant alors être fixé au profilé 11 en étant disposé soit à l'intérieur de la cavité 12 (non représenté), soit à l'extérieur, tel que représenté sur la figure 3. Quelque soit le mode de réalisation, le générateur de gaz 30 est fixé au profilé 11, par exemple par des vis, rivets, clips, par collage ou tout autre moyen approprié.

Des inserts de renfort peuvent également être disposés à l'intérieur de la cavité 12, solidarisés au profilé 11 de par leur forme et/ou par tout moyen approprié, par exemple par collage, vissage, rivetage, soudage. Les inserts peuvent, dans une variante de réalisation non illustrée, être réalisés par moulage d'un seul tenant avec le corps du profilé (profilé en aluminium ou magnésium ou un alliage analogue).

Les figures 4 à 7 représentent différents modes de réalisation de ces inserts de renfort.

Sur la figure 4, le profilé 11 représenté présente une section elliptique, semblable à un mât de bateau, et l'insert de renfort 40 présente une section transversale en forme de I comprenant deux parois d'appui 41, 42, qui sont appliquées contre des faces internes opposées du profilé 11 et reliées par une paroi de liaison 43 s'étendant au travers de la cavité 12, parallèlement à la direction longitudinale de la traverse 10. Les parois d'appui 41, 42 sont conformées de manière à épouser la face interne du profilé 11. La paroi de liaison 43 peut être orientée parallèlement à la direction de déploiement du coussin gonflable 20, ce qui peut permettre un meilleur renfort dans cette direction.

Un tel insert de renfort 40 ne peut être disposé en regard de l'ouverture 14 qui serait alors obturée par l'insert de renfort. De tels inserts de renfort 40 sont alors disposés de part et d'autre de l'ouverture 14 suivant la direction longitudinale de la traverse 10.

Sur la figure 5, le profilé 11 représenté présente une section elliptique, semblable à un mât de bateau, et l'insert de renfort 50 présente une section transversale sensiblement en forme de H. Dans l'exemple représenté, cette forme en H est obtenue par juxtaposition de deux parties supérieure 50a et inférieure 50b, solidarisées au niveau de la barre transversale 53a, 53b de la section en H. Chaque partie supérieure 50a et inférieure 50b comprend une portion 54a, 55a ; 54b, 55b respectivement des ailes de la section en H reliée à une barre transversale 53a, 53b respectivement. Le bord libre de chaque aile 54a, 55a, 54b, 55b comprend une paroi d'appui 56a, 57a ; 56b, 57b, qui est appliquée contre une face interne du profilé 11. Les parois d'appui 56a, 57a de la partie supérieure 50a de l'insert de renfort 50 sont sensiblement opposées aux parois d'appui 56b, 57b de la partie inférieure 50b de l'insert de renfort 50. Les parois d'appui 56a, 57a, 56b, 57b sont conformées de manière à épouser la face interne du profilé 11.

Dans l'exemple représenté, les ailes de la section en forme de H ne sont pas perpendiculaires à la barre transversale 53a, 53b de la section en forme de H, tel que visible sur la figure. Cette inclinaison peut être choisie de manière à améliorer la résistance de la traverse aux efforts subis lors du déploiement du coussin gonflable 20.

Un tel insert de renfort 50 ne peut être disposé en regard de l'ouverture 14 : il n'y aurait alors pas suffisamment de place pour disposer le coussin gonflable 20 à l'intérieur de la cavité 12. De tels inserts de renfort 50 sont alors disposés de part et d'autre de l'ouverture 14 suivant la direction longitudinale de la traverse 10.

Sur la figure 6, le profilé 11 représenté présente une section elliptique, semblable à un mât de bateau, et l'insert de renfort 60 est conformé de manière à présenter une forme identique à la forme de la traverse et à épouser au moins en partie la face interne des parois du profilé 11.

Dans cet exemple, l'insert de renfort 60 est un profilé ouvert de forme elliptique, dont l'ouverture est agencée pour correspondre avec l'ouverture 14 du profilé 11. Sur la figure 6, l'ouverture 14 est symbolisée par un trait épais.

En variante, l'insert de renfort 60 ne pourrait être ouvert que sur une partie correspondant à l'ouverture 14 et être fermé de part et d'autre de l'ouverture 14 suivant la direction longitudinale de la traverse 10.

Bien entendu, l'insert de renfort 60 représenté sur la figure 6 peut également être disposé uniquement de part et d'autre de l'ouverture 14 suivant la direction longitudinale de la traverse 10.

En outre, un renfort externe de forme semblable à la forme de l'insert de renfort 60 décrit en référence à la figure 6, mais solidarisé à la face externe du profilé 11, pourrait être prévu pour renforcer la traverse 10, éventuellement en combinaison avec l'un des inserts de renfort décrit en références aux figures 4 à 7.

Sur la figure 7, le profilé 11 représenté présente une section elliptique, semblable à un mât de bateau, et l'insert de renfort 70 présente une section transversale en forme de polygone à 4 côtés comprenant deux parois d'appui 71, 72, qui sont appliquées contre des faces internes opposées du profilé 11 et reliées par deux parois de liaison 73, 74 s'étendant au travers de la cavité 12 parallèlement à la direction longitudinale de la traverse 10. Les parois d'appui 71, 72 sont conformées de manière à épouser la face interne du profilé 11. Les parois de liaison 73, 74 peuvent être orientées parallèlement à la direction de déploiement du coussin gonflable 20, ce qui peut permettre un meilleur renfort dans cette direction.

Un tel insert de renfort 70 ne peut être disposé en regard de l'ouverture 14 qui serait alors obturée par l'insert de renfort. De tels inserts de renfort 70 sont alors disposés de part et d'autre de l'ouverture 14 suivant la direction longitudinale de la traverse 10.

## Revendications

1. Traverse (10) de planche de bord (1) de véhicule automobile, cette traverse (10) étant formée d'un profilé (11) à profil fermé, les parois du profilé (11) définissant une cavité interne (12), la traverse comprenant au moins un coussin gonflable de sécurité (20) disposé à l'intérieur de la cavité (12) en regard d'une ouverture (14) aménagée sur une paroi du profilé (11), **caractérisée en ce qu'**elle comprend un panneau de fermeture (15) obturant totalement ladite ouverture (14), ce panneau de fermeture (15) étant conformé pour permettre le déploiement du coussin gonflable (20) en dehors du profilé (11), et **en ce que** le profilé (11) a une section elliptique semblable à un mât de bateau, au moins un insert de renfort (40, 50, 60, 70) étant disposé à l'intérieur de la cavité (12) du profilé (11) de chaque côté de l'ouverture (14) suivant la direction longitudinale de la traverse et/ou au niveau de l'ouverture (14) suivant la direction longitudinale de la traverse, ledit au moins un insert de renfort (40, 50, 60, 70) étant conformé de manière à épouser au moins en partie la face interne des parois du profilé (11).

2. Traverse (10) de planche de bord (1) selon la revendication 1, **caractérisée en ce que** l'insert de renfort (40, 50, 70) présente une section transversale en forme de I, H ou en forme de polygone à au moins quatre côtés et/ou **en ce que** l'insert de renfort (70) est conformé de manière à présenter une forme identique à la forme de la traverse et à épouser au moins en partie la face interne des parois du profilé.

3. Traverse (10) de planche de bord (1) selon l'une des revendications 1 ou 2, **caractérisée en ce qu'**au moins un renfort externe est fixé au moins en partie sur la face externe des parois du profilé (11), de chaque côté de l'ouverture (14) suivant la direction longitudinale de la traverse et/ou au niveau de l'ouverture (14) suivant la direction longitudinale de la traverse.

4. Traverse (10) de planche de bord (1) selon l'une des revendications 1 à 3, **caractérisée en ce qu'**elle comprend un générateur de gaz (30) pour le gonflage du coussin gonflable (20) logé à l'intérieur de la cavité (12), ce générateur de gaz (30) étant fixé sur une face interne du profilé située en regard de l'ouverture (14).

5. Traverse (10) de planche de bord (1) selon l'une des revendications 1 à 3, **caractérisée en ce qu'**elle comprend un générateur de gaz (30) pour le gonflage du coussin gonflable (20) situé à l'extérieur du profilé (11), le générateur de gaz (30) étant fixé sur une face externe du profilé (11) du côté opposé à l'ouverture (14), le profilé (11) présentant un orifice (16) permettant de relier le générateur de gaz (30= au coussin gonflable (20).

6. Traverse (10) de planche de bord (1) selon l'une des revendications 1 à 5, **caractérisée en ce qu'**un élément de protection recouvre les bords de l'ouverture (14).

7. Traverse (10) de planche de bord (1) selon l'une des revendications 1 à 6, **caractérisée en ce que** le panneau de fermeture (15) est en matériau polymère ou en cuir.

8. Véhicule automobile comprenant une traverse (10) de planche de bord selon l'une des revendications précédentes, la traverse (10) étant orientée de sorte que le panneau de fermeture (15) soit situé en regard du buste d'un passager assis.

## Patentansprüche

1. Querträger (10) eines Armaturenbretts (1) eines Kraftfahrzeugs, wobei dieser Querträger (10) von einem Profilteil (11) mit geschlossenem Profil gebildet wird, wobei die Wände des Profilteils (11) einen inneren Hohlraum (12) definieren, wobei der Querträger mindestens einen Airbag (20) enthält, der im Inneren des Hohlraums (12) gegenüber einer an einer Wand des Profilteils (11) ausgesparten Öffnung (14) angeordnet ist, **dadurch gekennzeichnet, dass** er eine Verschlussplatte (15) enthält, die die Öffnung (14) vollständig verdeckt, wobei diese Verschlussplatte (15) gestaltet ist, um das Entfalten des Airbags (20) nach außerhalb des Profilteils (11) zu erlauben, und dass das Profilteil (11) einen elliptischen Querschnitt ähnlich einem Schiffsmast hat, wobei mindestens ein Verstärkungseinsatz (40, 50, 60, 70) innerhalb des Hohlraums (12) des Profilteils (11) auf jeder Seite der Öffnung (14) gemäß der Längsrichtung des Querträgers und/oder im Bereich der Öffnung (14) gemäß der Längsrichtung des Querträgers angeordnet ist, wobei der mindestens eine Verstärkungseinsatz (40, 50, 60, 70) so gestaltet ist, dass er sich zumindest zum Teil an die Innenseite der Wände des Profilteils (11) anpasst.

2. Querträger (10) eines Armaturenbretts (1) nach Anspruch 1, **dadurch gekennzeichnet, dass** der Verstärkungseinsatz (40, 50, 70) einen Querschnitt in Form eines I, H oder in Form eines Polygons mit mindestens vier Seiten aufweist, und/oder dass der Verstärkungseinsatz (70) so gestaltet ist, dass er eine Form gleich der Form des Querträgers aufweist und sich zumindest zum Teil an die Innenseite der Wände des Profilteils anpasst.

3. Querträger (10) eines Armaturenbretts (1) nach einem der Ansprüche 1 oder 2, **dadurch gekennzeichnet, dass** mindestens eine äußere Verstärkung zumindest zum Teil an der Außenseite der Wände des Profilteils (11) auf jeder Seite der Öffnung (14) gemäß der Längsrichtung des Querträgers und/oder im Bereich der Öffnung (14) gemäß der Längsrichtung des Querträgers befestigt ist.

4. Querträger (10) eines Armaturenbretts (1) nach einem der Ansprüche 1 bis 3, **dadurch gekennzeichnet, dass** er einen Gasgenerator (30) zum Aufblasen des im Inneren des Hohlraums (12) untergebrachten Airbags (20) enthält, wobei dieser Gasgenerator (30) an einer Innenseite des Profilteils befestigt ist, die sich gegenüber der Öffnung (14) befindet.

5. Querträger (10) eines Armaturenbretts (1) nach einem der Ansprüche 1 bis 3, **dadurch gekennzeichnet, dass** er einen Gasgenerator (30) zum Aufblasen des Airbags (20) enthält, der sich außerhalb des Profilteils (11) befindet, wobei der Gasgenerator (30) an einer Außenseite des Profilteils (11) auf der der Öffnung (14) entgegengesetzten Seite befestigt ist, wobei das Profilteil (11) eine Öffnung (16) aufweist, die es ermöglicht, den Gasgenerator (30) mit dem Airbag (20) zu verbinden.

6. Querträger (10) eines Armaturenbretts (1) nach einem der Ansprüche 1 bis 5, **dadurch gekennzeichnet, dass** ein Schutzelement die Ränder der Öffnung (14) bedeckt.

7. Querträger (10) eines Armaturenbretts (1) nach einem der Ansprüche 1 bis 6, **dadurch gekennzeichnet, dass** die Verschlussplatte (15) aus Polymermaterial oder aus Leder ist.

8. Kraftfahrzeug, das einen Querträger (10) eines Armaturenbretts nach einem der vorhergehenden Ansprüche enthält, wobei der Querträger (10) so ausgerichtet ist, dass die Verschlussplatte (15) sich gegenüber dem Oberkörper eines sitzenden Fahrgasts befindet.

## Claims

1. Crossmember (10) of a motor vehicle dashboard (1), this crossmember (10) being formed from a profiled element (11) having a closed profile, the walls of the profiled element (11) defining an inner cavity (12), the crossmember comprising at least one airbag (20) arranged inside the cavity (12) facing an opening (14) formed on a wall of the profiled element (11), **characterized in that** it comprises a closure panel (15) totally blocking off the said opening (14), this closure panel (15) being configured to allow the deployment of the airbag (20) outside the profiled element (11), and **in that** the profiled element (11) has an elliptical cross section similar to a boat mast, at least one reinforcing insert (40, 50, 60, 70) being arranged inside the cavity (12) of the profiled element (11) on each side of the opening (14) in the longitudinal direction of the crossmember and/or at the opening (14) in the longitudinal direction of the crossmember, the said at least one reinforcing insert (40, 50, 60, 70) being configured so as to at least in part hug the inner face of the walls of the profiled element (11).

2. Crossmember (10) of a dashboard (1) according to Claim 1, **characterized in that** the reinforcing insert (40, 50, 70) has an I-shaped or H-shaped cross section or a cross section in the shape of a polygon with at least four sides, and/or **in that** the reinforcing insert (70) is configured so as to have a shape identical to the shape of the crossmember and to at least in part hug the inner face of the walls of the profiled element.

3. Crossmember (10) of a dashboard (1) according to either of Claims 1 and 2, **characterized in that** at least one outer reinforcement is fixed at least in part to the outer face of the walls of the profiled element (11) on each side of the opening (14) in the longitudinal direction of the crossmember and/or at the opening (14) in the longitudinal direction of the crossmember.

4. Crossmember (10) of a dashboard (1) according to one of Claims 1 to 3, **characterized in that** it comprises a gas generator (30) for inflating the airbag (20) housed inside the cavity (12), this gas generator (30) being fixed to an inner face of the profiled element that is situated facing the opening (14).

5. Crossmember (10) of a dashboard (1) according to one of Claims 1 to 3, **characterized in that** it comprises a gas generator (30) for inflating the airbag (20) situated outside the profiled element (11), the gas generator (30) being fixed to an outer face of the profiled element (11) on the opposite side to the opening (14), the profiled element (11) having an orifice (16) for connecting the gas generator (30) to the airbag (20).

6. Crossmember (10) of a dashboard (1) according to one of Claims 1 to 5, **characterized in that** a protection element covers the edges of the opening (14).

7. Crossmember (10) of a dashboard (1) according to one of Claims 1 to 6, **characterized in that** the closure panel (15) is made of polymer material or of leather.

8. Motor vehicle comprising a crossmember (10) of a dashboard according to one of the preceding claims, the dashboard (10) being oriented such that the closure panel (15) is situated facing the chest of a seated passenger.
